# EUROPÄISCHE PATENTSCHRIFT

(11) **EP 3 387 236 B1**
(45) Veröffentlichungstag und Bekanntmachung des Hinweises auf die Patenterteilung: **25.12.2019**
(21) Anmeldenummer: 16797808.9
(22) Anmeldetag: 09.11.2016
(51) Int. Cl.: F02C 7/143, F01D 25/00

(54) **GASTURBINE MIT EINER NASSVERDICHTUNGSEINRICHTUNG ZUR EINBRINGUNG EINER TENSIDISCHEN FLÜSSIGKEITSMISCHUNG**
GAS TURBINE COMPRISING A WET COMPRESSION DEVICE FOR INTRODUCING A SURFACTANT LIQUID MIXTURE
TURBINE À GAZ DOTÉE D'UN DISPOSITIF DE COMPRESSION EN RÉGIME HUMIDE POUR INTRODUIRE UN MÉLANGE LIQUIDE TENSIOACTIF

(30) Priorität: 20.01.2016 DE 102016200678
(43) Veröffentlichungstag der Anmeldung: 17.10.2018
(73) Patentinhaber: Siemens Aktiengesellschaft, 80333 München (DE)
(72) Erfinder: HÜLSEMANN, Gerhard, 46145 Oberhausen (DE); SAVILIUS, Nicolas, 45359 Essen (DE)
(86) Internationale Anmeldenummer: PCT/EP2016/077126
(87) Internationale Veröffentlichungsnummer: WO 2017/125178

(56) Entgegenhaltungen:
- EP-A1- 1 557 539
- EP-A2- 1 365 127
- EP-A2- 1 903 188
- US-A1- 2015 300 263
- US-B1- 6 453 659

## Beschreibung

Die vorliegende Erfindung betrifft eine Gasturbine umfassend eine Wet-Compression-Einrichtung, mittels welcher bei Betrieb der Gasturbine in einen Verdichter der Gasturbine eine wässrige Flüssigkeitsmischung, welche wenigstens ein Tensid aufweist, in Tröpfchenform einbringbar ist. Zudem betrifft die vorliegende Erfindung ein Verfahren zum Betrieb einer solchen Gasturbine.

Bei derartigen Gasturbinen mit einer Wet-Compression-Einrichtung werden mitunter zur Leistungssteigerung Wassertröpfchen in den Ansaugluftstrom eingeführt, um so den Arbeitsmassenstrom zu erhöhen. Zur Verminderung bzw. Vermeidung von Erosion an den Verdichterschaufeln sind möglichst kleine Tropfengrößen an der Wet-Compression-Einrichtung einzustellen, damit einerseits der Impakt der flüssigen Wassertropfen auf den Oberflächen der Verdichterschaufeln möglichst gering ist bzw. eine Verdunstung der Wassertropfen im Verdichterluftstrom möglichst schnell erfolgen kann.

Die aus Wet-Compression resultierende Steigerung der Leistungsabgabe der Gasturbine kann durch zwei Haupteffekte erklärt werden. Durch die teilweise Verdampfung der Wassertropfen vor dem Eintritt in den Verdichter, nimmt die Temperatur der von dem Verdichter angesaugten Luft ab und ihre Dichte damit zu. Da der Verdichter einen konstanten Volumenstrom ansaugt, erhöht sich der durch den Verdichter angesaugte Massenstrom an Luft. Dadurch kann in der Brennkammer entsprechend mehr Brennstoff beigegeben werden und die Turbine dem Verbrennungsgas entsprechend mehr Leistung entnehmen. Somit ergibt sich der erste Teil der Leistungssteigerung der Gasturbine. Der zweite Teil der Leistungssteigerung ergibt sich aus dem sogenannten Intercooling-Effekt. Dabei verdampft der übrige Teil der Wassertropfen auf dem Weg durch den Verdichter und sorgt während der Verdichtung für eine kontinuierliche Kühlung des Arbeitsmediums. Die spezifische Arbeit, die für die Verdichtung aufgebracht werden muss, sinkt dadurch und die Leistungsabgabe der Gasturbine steigt.

Mit dem Wet-Compression-Verfahren lassen sich mitunter eine Leistungssteigerung von über zehn Prozent der Gasturbinenleistung erzielen. Das über die Wet-Compression-Einrichtung eingeführte Wasser in den Ansaugluftstrom wird nach Entspannung in der Entspannungsturbine wieder mit dem Abgas in die Atmosphäre abgegeben und ist damit für weitere Prozesse typischerweise verloren.

Ein bekannter Nachteil des Wet-Compression-Verfahrens besteht darin, dass, wie oben schon angedeutet, eine erhöhte Erosion auf der Oberfläche der Verdichterschaufeln erfolgt. Insofern ist ein erhöhter Wartungsaufwand die Folge, wodurch wiederum erhöhte Betriebskosten entstehen. Derartige Erosionserscheinungen können jedoch durch zusätzliche Schutzbeschichtungen der Verdichterschaufeln bzw. durch das frühzeitige Austauschen der Verdichterschaufeln verhindert bzw. wenigstens teilweise vermieden werden. Aber auch diese Maßnahmen sind mit höheren Betriebs- bzw. Wartungskosten verbunden und sind für den Betreiber unerwünscht. Weitere Maßnahmen zur Verminderung der Erosion an der Oberfläche der Verdichterschaufeln können etwa darin bestehen, die Betriebszeit mit der Wet-Compression-Einrichtung zeitlich zu limitieren, die Einbringung des Wassers in den Ansaugluftstrom mittels geeigneter Düsen vorzunehmen, so dass möglichst kleine und gleichmäßig verteilte Tröpfchen in den Ansaugluftstrom gelangen, oder aber auch einen ausreichend hohen Versorgungsdruck bei der Einbringung des Wassers in den Ansaugluftstrom sicherzustellen.

All diese Maßnahmen gehen jedoch weiterhin mit wirtschaftlichen Einbußen beim Betrieb der Wet-Compression-Einrichtung einher. Insbesondere eine Limitierung der Betriebszeit der Wet-Compression-Einrichtung reduziert die Flexibilität der Gasturbine und damit deren Einsatzfähigkeit für den Betreiber. Auch eine geeignete Auswahl an Düsen bzw. ein hoher Versorgungsdruck des Wassers kann weiterhin die Erosionserscheinungen nicht aufhalten, sondern zeitlich lediglich etwas verzögern.

Aus der EP 1 557 539 A1 ist eine Gasturbine umfassend einen Verdichter bekannt, welche eine Wet-Compression-Einrichtung enthält, wobei die Tropfengröße einer eingespritzten Flüssigkeit durch ein Tensid reduziert wird. EP 1 365 127 A2 zeigt ebenfalls eine Gasturbine mit Wet-Compression-Einrichtung gemäß dem Stand der Technik.

Insofern stellt sich die technische Aufgabe, eine weiterhin verbesserte Gasturbine vorzuschlagen, deren Betrieb mit einer Wet-Compression-Einrichtung eine Verminderung der Erosionserscheinungen auf den Verdichterschaufeln erlaubt.

Diese der Erfindung zugrunde liegende Aufgabe wird gelöst durch eine Gasturbine gemäß Anspruch 1 sowie ein Verfahren einer solchen vorab wie auch nachfolgend beschriebenen Gasturbine gemäß Anspruch 4.

Die der Erfindung zugrunde liegende Aufgabe wird gelöst durch eine Gasturbine umfassend eine Wet-Compression-Einrichtung, mittels welcher bei Betrieb der Gasturbine in einen Verdichter der Gasturbine eine wässrige Flüssigkeitsmischung, welche wenigstens ein Tensid aufweist, in Tröpfchenform einbringbar ist, wobei die wässrige Flüssigkeitsmischung zusätzlich wenigstens noch einen Entschäumer aufweist, die Gasturbine eine erste Dosiereinrichtung aufweist, welche dazu ausgebildet ist, eine vorbestimmte Menge an Tensid in Wasser zu geben, welches für die Nutzung in der Wet-Compression-Einrichtung vorgesehen ist, sowie dass die Gasturbine eine zweite Dosiereinrichtung aufweist, welche dazu ausgebildet ist, eine vorbestimmte Menge an Entschäumer in Wasser zu geben, welches für die Nutzung in der Wet-Compression-Einrichtung vorgesehen ist.

Ebenfalls wird die der Erfindung zugrunde liegende Aufgabe gelöst durch ein Verfahren zum Betrieb einer solchen vorab wie auch nachfolgend beschriebenen Gasturbine, wobei der Wet-Compression-Einrichtung die wässrige Flüssigkeitsmischung zugeführt wird.

An dieser Stelle ist darauf hinzuweisen, dass Tenside Substanzen sind, die die Oberflächenspannung einer Flüssigkeit oder die Grenzflächenspannung zwischen zwei Phasen herabsetzen und die Bildung von Dispersionen ermöglichen oder unterstützen bzw. als Lösungsvermittler wirken. Tenside bewirken u.a., dass zwei eigentlich nicht miteinander mischbare Flüssigkeiten, wie zum Beispiel Öl und Wasser, fein vermengt werden können.

Weiterhin ist darauf hinzuweisen, dass die Menge an gemischten bzw. gelösten Tensiden im Wasser individuell eingestellt werden kann und etwa je nach Betriebsbedingungen anpassbar ist. Die Erfindung sieht eine Gruppe von Tensiden in der wässrigen Lösung vor, das heißt also zwei oder mehr Tenside.

Ausführungsgemäß ist eine geeignete Steuer- bzw. Regeleinrichtung vorgesehen, die die Menge an Tensid entsprechend dem aktuellen Betriebszustand dem Wasser für die Wet-Compression-Einrichtung zugibt. Hierbei kann beispielsweise mittels geeigneter Sensoren ein Betriebsparameter der Gasturbine bzw. der Wet-Compression-Einrichtung aufgenommen werden und von der Steuer- bzw. Regeleinrichtung verarbeitet werden.

Erfindungsgemäß ist also vorgesehen, die Wet-Compression-Einrichtung mit einer wässrigen Flüssigskeitsmischung zu betreiben, welche wenigstens ein Tensid aufweist. Da das Tensid die Eigenschaft hat, die Oberflächenspannung des Wassers herabzusetzen, können die Wassertropfen leichter zerstäubt werden bzw. zerplatzen unter geringerer Impulsübertragung in noch kleinere Tröpfchen bei Auftreffen auf den Oberflächen der Verdichterschaufeln. Weiterhin ist vorteilhaft, dass die Bildung verhältnismäßig großer Tropfen etwa an Bauteilen des Ansauggases weitgehend verhindert werden kann. Durch die verhältnismäßig bessere Zerstäubung bzw. die geringere Impulsübertragung eines Flüssigkeitströpfchens auf der Oberfläche der Verdichterschaufeln kann auch die Erosion bei Betrieb der Wet-Compression-Einrichtung vermindert werden.

Ein weiterer vorteilhafter Nebeneffekt des Betriebs der Wet-Compression-Einrichtung mit der wässrigen Flüssigkeitsmischung besteht auch in einer verbesserten Reinigung des Verdichters. Diese resultiert daraus, dass Tenside typischerweise auch eine erhöhte Waschaktivität aufweisen, und damit auch besser geeignet sind, Verunreinigungen im Verdichter im Vergleich zu reinem Wasser auszuwaschen.

Im Rahmen der Erfindung ist insbesondere vorgesehen, dass die wässrige Flüssigkeitsmischung zusätzlich wenigstens noch einen Entschäumer aufweist. Auch die Menge an gemischtem bzw. gelöstem Entschäumer wird hierbei individuell eingestellt und ist je nach Betriebszustand anpassbar. Zudem ist es vorteilhaft, zwei oder mehr Entschäumer in der Flüssigkeitsmischung vorzusehen.

An dieser Stelle ist darauf hinzuweisen, dass Entschäumer chemische Formulierungen mit ausgeprägter Grenzflächenaktivität sind, welche geeignet sind, unerwünschte Schaumbildung (zum Beispiel bei der Abwasserreinigung, der Papierherstellung, beim Waschvorgang in Waschmaschinen, beim Lackieren, bei Fermentationsprozessen, usw.) zu unterdrücken und bereits gebildeten Schaum zu zerstören.

Der Entschäumer sorgt also dafür, dass ein Aufschäumen etwa bei der Verdüsung der wässrigen Flüssigkeitsmischung bzw. bei Impakt auf den Oberflächen der Verdichterschaufeln weitgehend vermieden werden kann. In anderen Worten kann der Entschäumer ein Zusetzen des Verdichters mit Schaum verhindern. Der Entschäumer, wie Versuche der Anmelderin gezeigt haben, hat hierbei keinen oder nur einen geringen Einfluss auf die durch die Tenside verminderte Oberflächenspannung des Wassers in der Flüssigkeitsmischung.

Die Gasturbine weist eine erste Dosiereinrichtung auf, welche dazu ausgebildet ist, eine vorbestimmte Menge an Tensid in Wasser zu geben, welches für die Nutzung in der Wet-Compression-Einrichtung vorgesehen ist. Die erste Dosiereinrichtung erlaubt also dem Wasser für die Wet-Compression-Einrichtung eine geeignete Menge an Tensid hinzuzugeben, und beeinflusst damit etwa das Zerstäubungsverhalten bzw. das Impaktverhalten und damit die Erosion der wässrigen Flüssigkeitsmischung in dem Verdichter der Gasturbine gezielt. Insbesondere wird die Menge an Tensid, welche in das Wasser gegeben wird, gemäß einem Betriebszustand der Gasturbine eingestellt. Hierzu werden typischerweise geeignete Betriebsparameter durch nicht weiter beschriebene Sensoren aufgenommen, und mittels einer Regelungs- bzw. Steuerungseinheit soweit verarbeitet, dass daraus eine geeignete Menge an Tensid für das Wasser berechnet werden kann.

Das Turbine weist eine zweite Dosiereinrichtung auf, welche dazu ausgebildet ist, eine vorbestimmte Menge an Entschäumer in Wasser zu geben, welches für die Nutzung in der Wet-Compression-Einrichtung vorgesehen ist. Die zweite Dosiereinrichtung ist dazu ausgebildet, eine betriebsabhängige Einbringung der Menge an Entschäumer in Wasser zu gewährleisten.

In Bezug auf die anderen technischen Merkmale gleicht die zweite Dosiereinrichtung im Wesentlichen der ersten.

Gemäß einer besonders bevorzugten Ausführungsform der Erfindung ist vorgesehen, dass das wenigstens eine Tensid aus der folgenden Gruppe von Tensiden ausgewählt ist: Polyalkylenglykolether, Polysorbat20, Alkylpolyglykoside; diese Substanzen eignen sich nicht nur gut zur Mischung mit Wasser, sondern weisen auch ein hohes Vermögen zur Verminderung der Oberflächenspannung des Wassers auf. Ebenfalls zeigt sich, dass diese Substanzen nach Durchströmen des Heißluftgases in der Gasturbine, insbesondere im Brennkammerbereich, selbst zerstört werden können, so dass in den Abgasen für die Umwelt weitgehend unbedenkliche Substanzen zu finden sind.

Gemäß einer weiteren bevorzugten Ausführungsform der Erfindung ist vorgesehen, dass der wenigstens eine Entschäumer aus der folgenden Gruppe von Entschäumern ausgewählt ist: Tri-n-butylphosphat, Monoglyceride, Diglyceride; diese Substanzen weisen in wässriger Verbindung ein hohes Vermögen zur Unterdrückung der Schaumbildung aus und werden nach Durchlaufen des Heißluftgases in der Gasturbine in weitgehend unbedenkliche Substanzen zerlegt.

Entsprechend einer bevorzugten Ausführungsform des erfindungsgemäßen Verfahrens kann vorgesehen sein, dass eine Steuer- bzw. Regeleinrichtung vorgesehen ist, welche die Menge an Tensid bzw. Entschäumer entsprechend dem aktuellen Betriebszustand der Gasturbine Wasser zugibt, welches für den Betrieb der Wet-Compression-Einrichtung vorgesehen ist. Wie weiter oben bereits ausgeführt, kann die jeweils zugegebene Menge mittels geeigneter Sensoren bestimmt werden, die einen Betriebsparameter der Gasturbine aufnehmen, welcher von der Steuer- bzw. Regeleinrichtung entsprechend verarbeitet wird.

Nachfolgend soll die Erfindung anhand einzelner Figuren im Detail näher beschrieben werden. Hierbei ist darauf hinzuweisen, dass die Figuren lediglich schematisch zu verstehen sind und insbesondere keinerlei Einschränkung der Ausführbarkeit daraus resultiert.

Weiterhin ist darauf hinzuweisen, dass die technische Funktion der technischen Merkmale, welche gleiche Bezugszeichen aufweisen, einander entsprechen soll.

Weiterhin ist darauf hinzuweisen, dass die nachfolgend beschriebenen technischen Merkmale in beliebiger Kombination miteinander, wie auch in beliebiger Kombination mit den vorab beschriebenen Ausführungsformen der Erfindung beansprucht werden, soweit die daraus resultierende Kombination die der Erfindung zugrunde liegende Aufgabe lösen kann.

Hierbei zeigen:
- FIG 1: eine erste Ausführungsform der erfindungsgemäßen Gasturbine in einer schematischen Schaltansicht;
- FIG 2: eine schematische Schaltansicht einer zweiten Ausführungsform der erfindungsgemäßen Gasturbine.

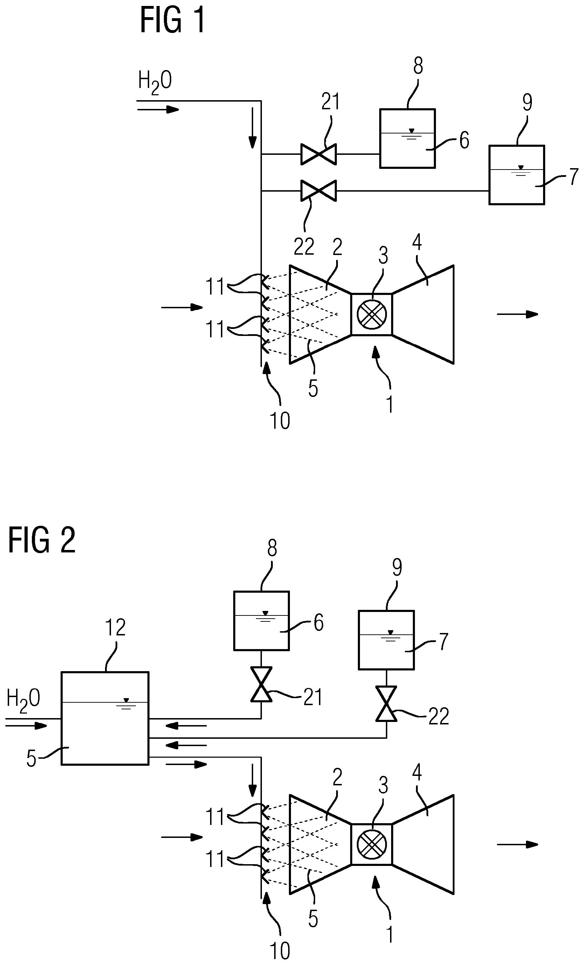

FIG 1 zeigt eine erste Ausführungsform einer erfindungsgemäßen Gasturbine 1 in einer schematischen Schaltansicht. Die Gasturbine 1 umfasst eine Wet-Compression-Einrichtung 10 mittels welcher über Düsen 11 eine wässrige Flüssigkeitsmischung 5 in den Verdichter 2 der Gasturbine 1 eingebracht werden kann. Hierbei wird die wässrige Flüssigkeitsmischung 5 direkt in den Ansaugluftstrom bei Betrieb der Gasturbine 1 eingedüst, wobei die wässrige Flüssigkeitsmischung 5 in verhältnismäßig kleine Tropfen zerstäubt wird. Nachfolgend wird die wässrige Flüssigkeitsmischung 5 in dem Verdichter zunehmend verdampft, so dass ab einer gewissen Verdichterstufe keine flüssige Flüssigkeitsmischung mehr vorliegt, sondern nur noch ihre verdampfte Form. Diese wird zusammen mit der Ansaugluft verdichtet und der Brennkammer 3 zur Verbrennung mit einem nicht weiter bezeichneten Brennstoff zugeführt. Das so entstehende Heißgasgemisch wird über die Entspannungsturbine 4 entspannt und nachfolgend aus dieser abgeführt.

Um nun gewährleisten zu können, dass die Zerstäubung der Flüssigkeitsmischung in verhältnismäßig kleine Flüssigkeitströpfchen erfolgt, sieht die vorliegende Ausführungsform der Gasturbine 1 vor, der Wet-Compression-Einrichtung 10 eine wässrige Flüssigkeitsmischung 5 zuzuleiten, welche wenigstens ein Tensid 6 sowie wenigstens einen Entschäumer 7 aufweist. Das Tensid 6 wird in einem ersten Behältnis 8 bevorratet, und kann je nach Anforderung über eine erste Dosiereinrichtung 21 dem Wasser zugegeben werden, welches für den Betrieb in der Wet-Compression-Einrichtung vorgesehen ist. Die erste Dosiereinrichtung 21 kann hierbei auch mit einer Steuerungs- bzw. Regeleinheit verschaltet sein, die aktuelle Betriebsparameter der Gasturbine 1 bei Einstellung der Menge an Tensid berücksichtigt.

Gleichermaßen kann die Menge an Entschäumer 7 mittels einer zweiten Dosiereinrichtung 22 eingestellt werden. Der Entschäumer 7 befindet sich in einem zweiten Behältnis 9 bevorratet, wobei aus diesem je nach Bedarf dem Wasser Entschäumer zugeführt werden kann, welches Wasser für die Nutzung in der Wet-Compression-Einrichtung 10 vorgesehen ist.

Aufgrund der Einbringung von einem Tensid sinkt nun die Oberflächenspannung des Wassers, welches mittels der Düsen 11 in der Wet-Compression-Einrichtung 10 zerstäubt wird. Durch die Verringerung der Oberflächenspannung kann damit einerseits eine verbesserte Zerstäubung erfolgen, andererseits kann auch ein Zerplatzen unter verringertem Impulsübertrag der gebildeten Wassertröpfchen auf der Oberfläche der Verdichterlaufschaufeln erfolgen. Da die Tröpfchen verhältnismäßig kleiner sind, als etwa im Vergleich zu einer Wet-Compression-Einrichtung ohne Beimischung von Tensid, erfolgt auch die Verdampfung des in den Verdichter 2 eingebrachten Wassers bzw. der Flüssigkeitsmischung schneller und die Erosionserscheinungen auf der Oberfläche der Verdichterschaufeln können vermindert werden. Wie weiter oben bereits ausgeführt, dient der Entschäumer 7 in erster Linie zur Vermeidung der Zusetzung des Verdichters 2 durch Schaumbildung.

FIG 2 zeigt eine weitere Ausführungsform der erfindungsgemäßen Gasturbine 1, welche sich von der in FIG 1 gezeigten Ausführungsform darin unterscheidet, dass das Tensid 6 bzw. der Entschäumer 7 nicht im Bereich der Zuleitung der Wet-Compression-Einrichtung 10 für die Düsen 11 vorgesehen ist, sondern die Düsen 11 werden direkt aus einem Speicherbehältnis 12 zentral versorgt, in welches Wasser Tensid 6 und Entschäumer 7 zur Vermischung miteinander eingebracht werden. In dem Speicherbehältnis 12 liegt damit eine geeignete bereits fertig gemischte wässrige Flüssigkeitsmischung 5 vor, die entnommen und ohne weitere chemische Konditionierung den Düsen 11 der Wet-Compression-Einrichtung 10 zugeführt werden kann. Die Menge an Tensid 6 wie auch Entschäumer 7 können jeweils durch eine erste Dosiereinrichtung 21 sowie eine zweite Dosiereinrichtung 22 eingestellt werden, wobei die jeweiligen Dosiereinrichtungen 21, 22 eine vorbestimmte Menge an Tensid 6 aus dem ersten Behältnis 8 bzw. vom Entschäumer 7 aus im zweiten Behältnis 9 zu entnehmen ermöglichen.

Weitere Ausführungsformen der Erfindung ergeben sich aus den Unteransprüchen.

## Patentansprüche

1. Gasturbine (1) umfassend eine Wet-Compression-Einrichtung (10), mittels welcher bei Betrieb der Gasturbine (1) in einen Verdichter (2) der Gasturbine (1) eine wässrige Flüssigkeitsmischung (5), welche wenigstens ein Tensid (6) aufweist, in Tröpfchenform einbringbar ist,
wobei die wässrige Flüssigkeitsmischung (5) zusätzlich wenigstens noch einen Entschäumer (7) aufweist, **dadurch gekennzeichnet, dass** die Gasturbine (1) eine erste Dosiereinrichtung (21) aufweist, welche dazu ausgebildet ist, eine vorbestimmte Menge an Tensid (6) in Wasser zu geben, welches für die Nutzung in der Wet-Compression-Einrichtung (10) vorgesehen ist, sowie dass die Gasturbine (1) eine zweite Dosiereinrichtung (22) aufweist, welche dazu ausgebildet ist, eine vorbestimmte Menge an Entschäumer (7) in Wasser zu geben, welches für die Nutzung in der Wet-Compression-Einrichtung (10) vorgesehen ist.

2. Gasturbine nach Anspruch 1,
**dadurch gekennzeichnet, dass**
das wenigstens eine Tensid (6) aus der folgenden Gruppe von Tensiden ausgewählt ist: Polyalkylenglykolether, Polysorbat20, Alkylpolyglykoside.

3. Gasturbine nach einem der vorhergehenden Ansprüche,
**dadurch gekennzeichnet, dass**
der wenigstens eine Entschäumer (7) aus der folgenden Gruppe von Entschäumern ausgewählt ist: Tri-n-butylphosphat, Monoglyceride, Diglyceride.

4. Verfahren zum Betrieb einer Gasturbine (1) gemäß einem der vorhergehenden Ansprüche,
**dadurch gekennzeichnet, dass**
der Wet-Compression-Einrichtung (10) die wässrige Flüssigkeitsmischung (5) zugeführt wird.

## Claims

1. Gas turbine (1) comprising a wet compression device (10), by means of which an aqueous liquid mixture (5), which contains at least one surfactant (6), in droplet form can be introduced into a compressor (2) of the gas turbine (1) during the operation of the gas turbine (1),
wherein
the aqueous liquid mixture (5) additionally contains at least a defoaming agent (7)
**characterized in that** the gas turbine (1) has a first metering device (21), which is designed to feed a predetermined quantity of surfactant (6) into water which is provided for use in the wet compression device (10), and **in that** the gas turbine (1) has a second metering device (22), which is designed to feed a predetermined quantity of defoaming agent (7) into water which is provided for use in the wet compression device (10).

2. Gas turbine according to Claim 1,
**characterized in that**
the at least one surfactant (6) is selected from the following group of surfactants: polyalkylene glycol ether, polysorbate20, alkyl polyglycosides.

3. Gas turbine according to one of the preceding claims,
**characterized in that**
the at least one defoaming agent (7) is selected from the following group of defoaming agents: tri-n-butyl phosphate, monoglycerides, diglycerides.

4. Method for operating a gas turbine (1) according to one of the preceding claims,
**characterized in that**
the aqueous liquid mixture (5) is fed to the wet compression device (10).

## Revendications

1. Turbine (1) à gaz, comprenant un dispositif (10) de compression en régime humide, au moyen duquel, lorsque la turbine (1) à gaz fonctionne, un mélange (5) aqueux liquide, contenant au moins un agent (6) tensioactif, peut être introduit sous forme de gouttelettes dans un compresseur (2) de la turbine (1) à gaz,
dans laquelle
le mélange (5) aqueux liquide a, en outre, au moins encore un agent antimousse (7), **caractérisée en ce que**
la turbine (1) à gaz a un premier dispositif (21) d'addition dosée, constitué de manière à donner une quantité déterminée à l'avance d'agent (6) tensioactif dans de l'eau, lequel est prévu pour être utilisé dans le dispositif (10) de compression en régime humide, la turbine (1) à gaz ayant un deuxième dispositif (22) d'addition dosée, constitué pour donner dans l'eau une quantité déterminée à l'avance d'agent antimousse (7), lequel est prévu pour être utilisé dans le dispositif (10) de compression en régime humide.

2. Turbine à gaz suivant la revendication 1,
**caractérisée en ce que**
le au moins un agent (6) tensioactif est choisi dans le groupe suivant d'agents tensioactifs : oxyde de polyalcoylène glycol, polysorbate20, polyglycoside d'alcoyle.

3. Turbine à gaz suivant l'une des revendications précédentes,
**caractérisée en ce que** le au moins un agent (7) antimousse est choisi dans le groupe suivant d'agents antimousse : tri-n-butylphosphate, monoglycéride, diglycéride.

4. Procédé pour faire fonctionner une turbine à gaz suivant l'une des revendications précédentes,
**caractérisé en ce que**
l'on envoie le mélange (5) aqueux liquide au dispositif (10) de compression en régime humide.
